# EUROPEAN PATENT APPLICATION

(11) **EP 4 810 951 A1**
(43) Date of publication of application: **23.09.2026**
(21) Application number: 25165352.3
(22) Date of filing: 21.03.2025
(51) Int. Cl.: G01N 27/447, G01N 30/46, G01N 30/72

(54) **WORKFLOWS FOR MASS SPECTROMETRY**

(71) Applicant: Max-Planck-Gesellschaft zur Förderung der Wissenschaften e.V., 80539 München (DE)
(72) Inventor: Wallmann, Georg, 82152 Martinsried (DE); Müller-Reif, Johannes, 82152 Martinsried (DE); Rosenberger, Florian, 82152 Martinsried (DE); Mann, Matthias, 82152 Martinsried (DE)
(74) Representative: Dentons Patent Solutions Rechtsanwaltsgesellschaft mbH

(57) **Abstract**

The present invention relates to a method of analyzing multiple samples, said method using a system comprising a plurality of chromatographic columns connected to one mass spectrometer, said method comprising loading different samples onto different chromatographic columns at different times, followed by elution, wherein the shortest time that elapses between successive starts of elution from said columns within said system min(delta t) is shorter than the shortest time required for elution min(t(elution)).

## Description

The present invention relates to a method of analyzing multiple samples, said method using a system comprising a plurality of chromatographic columns connected to one mass spectrometer, said method comprising loading different samples onto different chromatographic columns at different times, followed by elution, wherein the shortest time that elapses between successive starts of elution from said columns within said system min(delta t) is shorter than the shortest time required for elution min(t(elution)).

In this specification, a number of documents including patent applications and manufacturer's manuals are cited. The disclosure of these documents, while not considered relevant for the patentability of this invention, is herewith incorporated by reference in its entirety. More specifically, all referenced documents are incorporated by reference to the same extent as if each individual document was specifically and individually indicated to be incorporated by reference.

Liquid chromatography-mass spectrometry (LC-MS) is limited in throughput by the length of a liquid chromatography cycle (gradient + overhead time) per MS, since only one sample can be measured per MS simultaneously. This has been partially addressed by chemical or metabolic labeling and mixing of samples for a single LC-MS run. Labelling has limitations concerning data completeness, quantification accuracy or depth of measurement. Currently, there is an exponential and unprecedented increase in demand for LC-MS-based biological research, for instance due to developments for robust single-cell proteomics, plasma proteomics, and spatial methods in the proteome and metabolome space. The developments are hard-capped by the LC-MS throughput limitation as is widely acknowledged in the field.

State of the art for LC-MS analytical systems is the consecutive acquisition of data, where in the time domain, governed by the LC gradient, one sample is measured only when the previous sample is fully eluted from the chromatographic column. Parallel LC-MS setups with multiple columns and emitters in front of the mass spectrometer exist and are commercialized (Hosp et al., Molecular & Cellular Proteomics: MCP, 14(7), pp. 2030-2041 (2015); Zheng et al., Thermo Fisher Scientific Technical Note 003335 (2024)), where LC overhead time (i.e., column equilibration and sample loading on the chromatographic column) is omitted by switching the active liquid chromatography column and emitter immediately after gradient completion. While this amounts to a certain improvement, such improvement is nevertheless limited, given that only the overhead time is avoided.

In other words, there is an unmet need for methods and devices which permit a further and significant increase in sample throughput in spectrometric and spectroscopic procedures, in particular MS.

The present invention addresses *inter alia* this problem. Evidence in that respect is provided in the Examples enclosed herewith.

Accordingly, the present invention, in a first aspect, provides a method of analyzing multiple samples, said method using a system comprising a plurality of chromatographic columns connected to one mass spectrometer, said method comprising loading different samples onto different chromatographic columns at different times, followed by elution, wherein the shortest time that elapses between successive starts of elution from said columns within said system min(delta t) is shorter than the shortest time required for elution min(t(elution)).

The term "chromatography" has its art-established meaning. In the context of the present invention, it refers primarily to methods of separating analytes as a function of space and/or time. When performed in column or cartridge format, analytes are usually separated both in space and time, given that during migration of the constituents of a sample through said column or cartridge, owing to analyte-specific affinities to the column matrix, a spatial separation along the column axis occurs. At the same time, and focusing on analytes leaving said column or cartridge at the bottom end (the top end being the end where samples are being loaded), analytes will leave the column at different points in time. The process of analytes being unbound from and leaving the column or cartridge at different times (said times also being referred to as retention times) is commonly referred to as elution. Typically, after loading the sample onto a column or cartridge, the composition of the mobile phase is changed from loading conditions to elution conditions. For the purpose of eluting, gradients may be employed. A further commonly used condition for columns and cartridges are washing conditions.

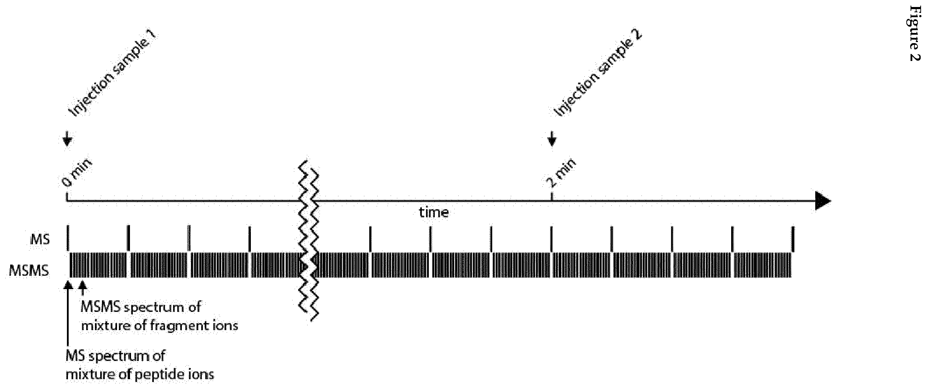

The term "mass spectrometry" has its art-established meaning. In the field of analysis of protein samples including proteomics, it is common to operate a mass spectrometer in two distinct modes. In one mode, also referred to as "MS mode", peptides arising from a fragmentation of proteins comprised in the sample, are analyzed, after separation with chromatographic of electrophoretic methods, wherein different peptides give rise to different peaks. In a second mode, also referred to as "MS/MS mode", the mass spectrometer performs a fragmentation of said peptides which allows the determination of their sequence. To that end, ions are transferred into a collision cell which is a component of the mass spectrometer. Of note, the former mention of "fragmentation" refers to a process which uses proteins or polypeptides as starting materials and delivers peptides. This fragmentation may be done by proteolytic digestion, e.g. with trypsin. The latter mention refers to a fragmentation of said peptides inside the mass spectrometer to yield yet smaller fragments which allow inference of the amino acid sequence. Generally, one scan (or more than one scan) in MS mode is followed by multiple scans in MS/MS mode, wherein this pattern is continuously being repeated during any given elution process (see Figure 2). Under certain circumstances, the MS mode may be dispensed with.

Typically, but not necessarily, the mass spectrometer is operated in data-independent acquisition (DIA) mode. The methods of the invention may also be used when the mass spectrometer is operated in data-dependent acquisition (DDA) mode or targeted methods like parallel reaction monitoring (PRM) or selected ion monitoring (SIM).

The term "system" refers to the combination of one mass spectrometer and a plurality of chromatographic columns or cartridges configured to inject analytes into said mass spectrometer. Such system defines a further aspect of the invention; see the disclosure of a system of the invention further below.

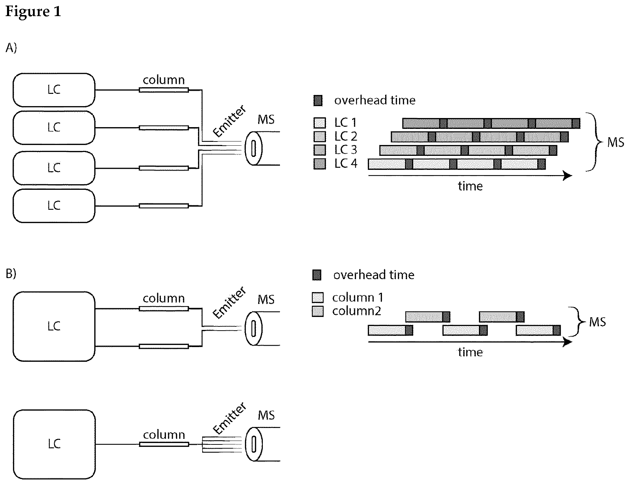

A salient feature of the present invention is the following combination. In terms of arranging columns or cartridges on the one hand and a mass spectrometer on the other hand, the method requires a plurality of chromatographic columns or cartridges connected to one mass spectrometer. In terms of operating such configuration, the method of the invention requires loading different samples onto different chromatographic columns at different times, followed by elution, wherein the shortest time that elapses between successive starts of elution from said columns within said system min(delta t) is shorter than the shortest time required for elution min(t(elution)). The operator "min" always applies to the system as a whole. See Figure 1A for illustration and exemplary embodiments.

The term "min(delta t)" is a shorthand designation of the time that elapses between successive starts of elution from said columns within said system. To explain further, the invention employs a plurality of columns (see Figure 1). In the exemplary case of three columns, elution of the first column may start at t1, elution of second column at t2, and elution of the third column at t3. In that scenario, the numbering of columns is arbitrary but preferably columns are numbered by the time-wise succession of starts of elution across the system. What matters are the points in time when elution starts. The mentioned min(delta(t)) in that case is the minimum of (|t2 - t1|, |t3 - t1| and |t3-t2 |). In exemplary settings, t1 is followed by t2, and t2 is followed by t3. In further exemplary settings, t2 minus t1 and t3 minus t2 are equal. In other words, said min(delta t), in such settings, becomes a delta t, wherein said delta t is the time that elapses between the start of elution of column n+1 and column n.

The term "min t(elution)" is the minimum time across the system of the invention required for elution of all analytes of interest. In case columns or cartridges are the same, and if furthermore the samples to be analyzed are similar in composition (for example all of them are peptides obtained by fragmentation of proteins, for example proteins comprised in a proteomic sample), the t(elution) will be constant across all columns or cartridges, the consequence being that min t(elution) degenerates to t(elution) which is subject of certain embodiments disclosed further below.

Typical elution times are in the range of minutes such as from about 1 min to about 100 minutes including about 5 minutes to about 50 minutes and about 10 minutes to about 30 minutes including about 20 minutes. Having said that, what matters in the context of the present invention are not so much absolute times, but relative times or ratios as explained in the following.

As regards the relation between min(delta t) and min(t(elution)), the present invention sets forth a requirement that the former is shorter than the latter. This goes significantly beyond the prior art as discussed above, given that saving the overhead time is far from feeding samples from a second column or cartridge into the mass spectrometer prior to elution from a first column or cartridge being complete. The term "overhead time" refers to the time that elapses from the end of elution from a given column until the start of the next elution process from the same column as depicted in Figure 1B. It includes cleaning of the column, equilibration thereof and loading of the sample for the subsequent run.

Having said that, and this will be described in more detail further below, the present invention even allows for min(t(elution)) to be a multiple (with or without rounding) of min(delta t), the term multiple referring to one-digit numbers, two-digit numbers and even three-digit numbers.

This amounts to an unprecedented increase in sample throughput in mass spectrometric analysis, including analysis of complex samples such as proteomic samples. The methods of the invention can be referred to as being multiplexed, in particular in the time domain, by running a plurality of elution processes which overlap in the time domain.

Of note, ratios of min(t(elution)) over min(delta t) greater than 1, greater than about 2 or greater than about 5 can be achieved without any additional measures. In other words, the difference between elution times of analytes from a first column or cartridge and from a second column or cartridge are sufficient to allow for a distinction between them in the course of state-of-the-art downstream data processing.

Yet, and this is subject of further embodiments of the invention as disclosed further below, the present inventors developed a more capable version of downstream data processing which allows for a yet further shortening of the time delta t which elapses between subsequent starts of elution within said system. Exemplary values of delta t in that context are in the range of seconds such as from about 1 second to about 100 seconds, including from about 5 seconds to about 50 seconds such as about 10 seconds.

"Data processing" or "downstream data processing" as used herein refers on the one hand to art-established data processing for assigning peaks to analytes. On the other hand, the present invention recognizes the notion of enhanced downstream data processing which constitutes embodiments of the invention as detailed further below. In brief, such enhancement employs methods of machine learning for the purpose of predicting elution times of analytes. Such enhancement allows for a considerable further shortening of the time elapsing between successive starts of elution, in particular in relative terms as compared to min(t(elution)) or, in case of identically configured columns of cartridges, as compared to t(elution).

In some embodiments, said chromatography is liquid chromatography (LC) or gas chromatography (GC).

The skilled person can choose, where necessary depending on the analytes of interest, appropriate stationary phases for chromatography. In case of LC, these include octadecylsilane that may be coupled to silica; octyl silane that may be coupled to silica; silica; silica with phenyl groups bound thereto; polystyrene-divinylbenzene; cross-linked dextran; cross-linked agarose; functionalized resins, wherein functional groups include sulfonate, carboxylate and amine; as well as derivatives and/or combinations of any of the preceding. In case of GC, suitable stationary phases include poly-dimethyl-siloxane; polyethylene glycol, divinylbenzene, and derivatives and/or combinations thereof.

While LC and GC use mobile phases in different states of matter (liquid in case of LC and gaseous in case of GC), the present disclosure uses common terminology to the processes occurring in either case. In particular, the term "elution" applies to both implementations.

In a second aspect, related to the first aspect, the present invention provides a method of analyzing multiple samples, said method using a system comprising a plurality of electrophoretic devices connected to one mass spectrometer, said method comprising loading different samples onto different electrophoretic devices at different times, followed by electrophoresis, wherein the shortest time that elapses between successive starts of electrophoresis from said devices within said system min(delta t) is shorter than the shortest time required for electrophoresis min(t(electrophoresis)).

Of note, chromatography-based methods and electrophoresis-based methods are presented separately herein for the mere reason that the art uses different terminologies for the processes occurring on either system. Beyond that, there is full analogy between the method of the first aspect and the method of the second aspect.

In some embodiments of the second aspect, said electrophoresis is capillary electrophoresis. Capillary electrophoresis is sometimes referred to as "CESI", wherein "ESI" refers to a preferred type of ionization (see below for further information about ionization methods).

The skilled person can choose, where necessary depending on the analytes of interest, appropriate stationary phases for CESI. These include silica, polyacrylamide, octadecylsilane and combinations and/or derivatives thereof.

While the two aspects of the invention described above refer to specific analytical methods, the invention is not so limited. Indeed, any analytical method which separates analytes in the time domain may be employed instead of or in addition to chromatography or electrophoresis.

While there is significant analogy between the method of the first and the second aspect, there may be differences as regards the preferred method of ionization. Ionization is a process that takes places when analytes elute from chromatographic columns or cartridges or when analytes come off an electrophoresis device.

Preferred ionization methods for LC-MS setting include electrospray ionization (ESI). Preferred ionization methods for GC-MS setting include electron ionization (EI) und chemical ionization (CI). Preferred ionization methods in a capillary electrophoresis-MS setting include electrospray ionization (ESI) in which case the combined online procedure is also referred to as CESI.

Practical applications of the present invention are not particularly limited. The include applications in the field of proteomics and metabolomics, each of them including single-cell applications, analysis of bodily fluids such as plasma and analysis of environmental samples. Bodily fluids include whole blood, serum, plasma, cerebrospinal fluid, saliva, nasal swab, urine, synovial fluid, vaginal fluid, semen, tear fluid, and sweat. Further applications include determining and monitoring presence and amount of pharmaceutically active agents. What is common to all these and further fields, is that there is a constantly and rapidly increasing demand for these applications and their throughput.

In the following, certain embodiments of the invention are disclosed. Unless stated otherwise, said embodiments are embodiments of both the first and the second aspect of the invention.

In some embodiments, the time that elapses between successive starts of elution or electrophoresis, respectively, is a constant delta t.

This embodiment refers to a regular pattern of starts of elution from different columns or cartridges comprised in the system defined above.

In some embodiments, the time required for elution or electrophoresis is a constant t(elution) or t(electrophoresis), respectively.

This embodiment may go along with similar or identical designs of separation devices, be it by means of chromatography or capillary electrophoresis. Said similar designs may refer to size, geometry, stationary phase and/or mobile phase; see below for further details on such implementations.

In some embodiments, the ratio t(elution) / delta t or the ratio t(electrophoresis) / delta t, respectively, after rounding off, is an integer n which preferably is the number of columns, electrophoresis devices and/or samples.

To the extent reference is made above to the number of samples, it is understood that this refers to one cycle. A cycle in that context refers to a time interval which is essentially governed by t(elution) or t(electrophoresis), wherein during that time elution from at least one column, cartridge or electrophoresis device is complete and elution from the remainder of columns, cartridges or electrophoresis devices has at least begun. After one such cycle, one or more further cycles may ensue, wherein in the respective following cycle, new samples are loaded on any of said columns, cartridges or electrophoresis devices comprised in said system.

The above embodiments define preferred implementations of the present invention. Different columns are loaded with different samples, and elutions are arranged such that during the total time required for elution t(elution) or the total time for all analytes of interest coming of the electrophoretic device t(electrophoresis), all columns, cartridges and electrophoretic devices, respectively, comprised in said systems as defined above, have at least initiated to feed analytes into said mass spectrometer.

In some embodiments, said ratio, without rounding off, is an integer n.

In some embodiments, n is from 2 to about 200, preferably 3 to about 100 such as 4 to about 50 or about 5 to about 20.

As used herein, the term "about" refers to deviations from the recited value of +/- 20%, +/- 10%, or +/- 5%. Moreover, the term "about" accommodates deviations arising from methods of determining the respective parameter as common in the art.

In some embodiments, eluates from at least two or all of said columns or from at least two or all of said electrophoretic devices, respectively, are continuously fed into said mass spectrometer.

In some embodiments, at least two, preferably all columns or electrophoretic devices, respectively, are identical with regard to one or both of stationary phase and physical dimensions.

Such embodiments are designed for easier hardware setup and/or for easier downstream data analysis.

In some embodiments related to chromatography, the same eluent(s) is/are used in at least two, preferably in all columns.

Suitable eluents are well known in the art and can be chosen, where necessary in view of the nature of the analytes and/or the solid phase used in the analytical methods described herein, by a skilled person without further ado.

For example, where the analytical method is LC, suitable eluents include organic solvents such as methanol and acetonitrile. Optional additives include additives which optimize ionization such as formic acid or ammonium acetate.

In the field of GC, eluents (or carries gases) include inert gases such as helium or nitrogen.

In some embodiments related to chromatography, elution is gradient elution.

The term "gradient elution" has its art-established meaning. It refers to an elution process where the composition of the eluent changes over time. In certain embodiments, relating to LC, the eluent is a mixture of solvents A and B, wherein at the beginning of the elution process said eluent may consist only of eluent A, and at the end of the elution process said eluent may consist only of eluent B. During the intervening period, the relative amount of eluent B is constantly ramped up. Such ramping up may be characterized by a linear function of time, wherein also different functions of time are embraced by the present invention. The same applies *mutatis mutandis* to GC. The term "gradient elution" also includes cases where at the beginning and/or the end of the elution process, both eluents A and B are present, provided that concentration of either A or B changes over time. Eluents A and/or B may be pure substances or solutions of pure substances on the one hand, and mixtures of substances or solutions thereof on the other hand.

In some embodiments, at least two samples, preferably all samples are not labelled. As explained in the background section above, state of the art methods of improving throughput make use of labelling such as isotope labelling. For example, two samples originating from a healthy tissue or individual and a diseased tissue or individual may be combined prior to subjecting them to mass spectrometric analysis, provided they are distinctly labelled.

The present invention allows for dispensing with such requirement. Indeed, samples may be used as they are obtained without any labelling requirements. Yet, they may be fed in rapid and subsequent order into the mass spectrometer as explained above. The possibility to dispense with isotope labelling as well as with chemical labelling amounts to a further advantage of the present invention.

Having said that, the method of multiplexing in accordance with the invention is orthogonal to the above-mentioned label-based approaches. Therefore, theoretically, the herein described approach and label-based multiplexed approaches could be combined in future applications.

In some embodiments, the data generated by the mass spectrometer are assigned to individual samples.

In state-of-the-art MS workflows, this is a standard procedure. As explained above, as long as the ratio t(elution) (or t(electrophoresis) over delta t is in the single-digit range, generally no extra measures in terms of analysis software are required.

On the other hand, and to the extent a further increase of the ratio t(elution) (or t(electrophoresis) over delta t is desirable, further developments by the present inventors become relevant. Accordingly, and in some embodiments, assigning includes using a machine learning algorithm.

In some embodiments, said algorithm predicts analyte retention times on said columns or electrophoretic devices, respectively.

This approach allows for a further shortening of the time elapsing between successive elutions within the system defined above. Data processing using machine learning may be effected as described in the following.

Data processing is performed on a per-sample basis using the estimated or stored injection time as a starting point. A spectral library containing all potentially observable peptides is generated from known species databases. The library contains precursor mass-to-charge ratio, expected relative retention time as well as the spectra for each peptide ion. Based on this library peptides are searched, and their observed retention time is calibrated to their predicted retention time. Then, a lower and upper limit for assigning peptide identifications to a sample is determined. Using this information, statistically confident identifications are assigned and filtered given a false discovery rate limit.

Precursors passing the false discovery rate limit are used to learn an updated retention time model which describes the individual behavior of peptides on the chromatography or electrophoresis for a single sample. The weights in the deep neural network are optimized to reduce the error of predicted and observed retention times for a given peptide sample. This reduces the prediction error over the base model and allows more narrow retention time limits for assigning peptides to a single sample.

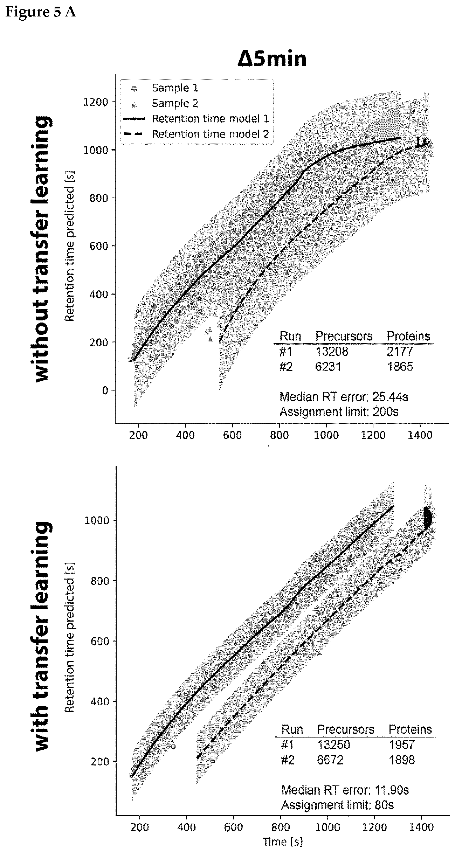

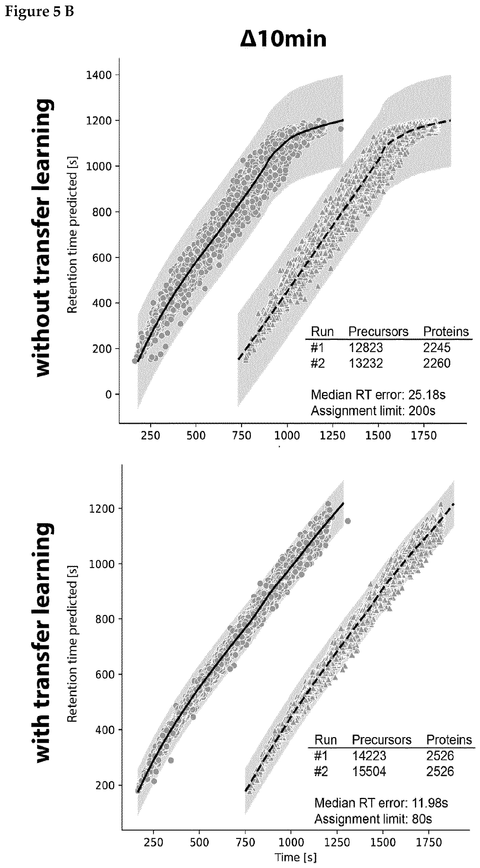

Following the initial search, a new peptide library is predicted using the updated retention time model. And the steps, peptide search, calibration, optimization of retention time limits and false discovery rate control are repeated. Performing this process for all samples allows unambiguous assignment of identified peptides to samples (Figures 5A and B, respective upper panels).

Transfer learning (fine-tuning) allows to further narrow down the retention time window for any given analyte; see Figures 5A and B, respective lower panels. This in turn provides for yet shorter delta t values.

The same applies *mutatis mutandis* to other types of analytes.

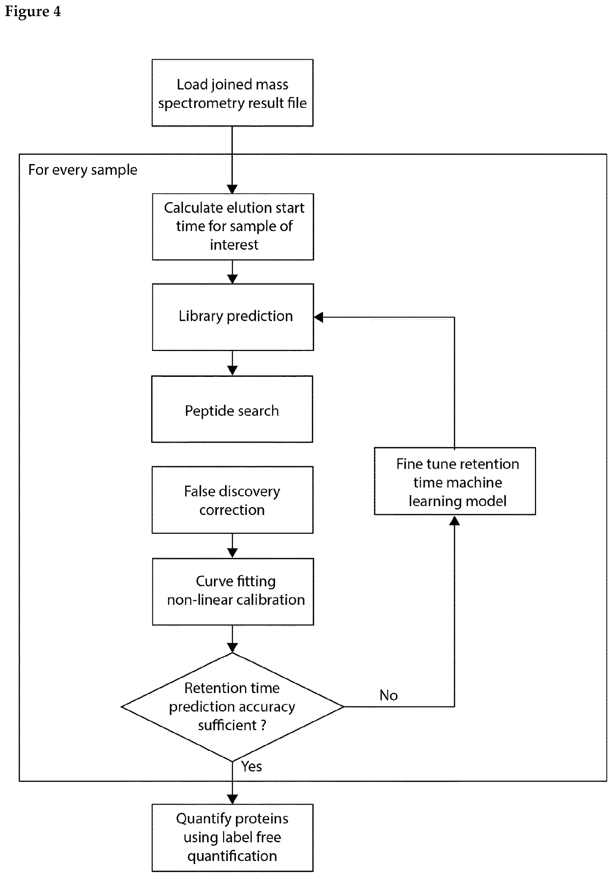

A corresponding workflow for smart data analysis is shown in Figure 4. The subsection "Data Analysis" of Example 1 provides further details about an exemplary implementation of data analysis in accordance with the invention.

In some embodiments, said samples comprise one or more of small molecules, amino acids, peptides, polypeptides, proteins, metabolites, saccharides, lipids, fatty acids, sterols, hydrocarbons, organic acids, drugs, macromolecular assemblies and/or said samples are environmental samples including samples suspected of comprising environmental toxins. The term "small molecule" includes small organic molecules, e.g. with a molecular weight below 1000, below 800 or below 500 and may include, in particular in the case of GC, volatile organic and anorganic compounds including H₂, O₂ and N₂. The term "small molecule" also embraces pharmaceutically active agents, drugs as well as metabolites.

The term "macromolecular assemblies" is not particularly limited. It embraces viral capsids as well as proteasomes, ribosomes etc.

In some embodiments, and to the extent considered necessary, spray efficiency normalization may be performed.

To explain further, spray from the simultaneous emitters can vary in efficiency as a consequence of how a given emitter is positioned relative to the MS entrance, and furthermore over gradient time relative to the other column or electrophoresis setups. To account for those differences, a series of bioorthogonal analytes with retention time distributed equally over the gradient time is spiked into every analysed sample at fixed amount. This enables quantitative spray efficiency correction per column or electrophoresis device over the elution or gradient course. The term "bioorthogonal analyte" refers to analytes not expected to occur in the samples under consideration. Preferably, the chemistry of said bioorthogonal analytes is similar to that of the expected analytes. For example, in case of analytes being peptides of natural origin, a bioorthogonal analyte may be a peptide not naturally occurring in the sample under consideration such as a peptide from a species different from the species from which the samples have been taken, a peptide made of or comprising non-naturally occurring amino acids, or a peptidomimetic.

In a third aspect, the present invention provides a system comprising: (a) a plurality of columns or electrophoretic devices, respectively, connected to (b) one mass spectrometer, wherein said system is configured for concomitant sample injection from at least two or all said columns, or at least two or all of said electrophoretic devices, respectively, into said mass spectrometer.

This system or, equivalently, device, mirrors the features of the methods of the first and second aspect. In particular, the requirement of concomitant sample injection from a plurality of columns or electrophoretic devices implies that delta t is shorter than t(elution) or t(electrophoresis), respectively.

In some embodiments, said system is furthermore configured for continuous sample injection from at least two or all said columns, or at least two or all of said electrophoretic devices, respectively, into said mass spectrometer. In other words, all emitters (ion sources) are placed in front of the ion transfer tube of the mass spectrometer, thereby allowing, when in use, simultaneous spraying into the mass spectrometer.

In some embodiments, said system comprises more than one such 2, 3, 4, 5, 6, 7, 8, 9, 10 or more ion transfer tubes. This may be a means to accommodate a larger number of columns, cartridges or electrophoretic devices being coupled to said mass spectrometer. In other words, the plurality of ion transfer tubes is configured for concomitant feeding of analytes into the mass spectrometer.

As shown in the lower panel of Figure 1 B, multinozzle hardware for increasing ionization efficiency may be used in addition.

In some embodiments, said system further comprises (c) a computer program for predicting analyte retention times. Features of said computer program are detailed above, with a flow chart being shown in Figure 4 and further details being given in Example 1.

Embodiments of the first and second aspect of the invention define, to the extent applicable, embodiments of the third aspect.

The present invention furthermore relates to the following items:
1. A method of analyzing multiple samples, said method using a system comprising a plurality of chromatographic columns connected to one mass spectrometer, said method comprising loading different samples onto different chromatographic columns at different times, followed by elution, wherein the shortest time that elapses between successive starts of elution from said columns within said system min(delta t) is shorter than the shortest time required for elution min(t(elution)).
2. The method of item 1, wherein said chromatography is liquid chromatography (LC) or gas chromatography (GC).
3. A method of analyzing multiple samples, said method using a system comprising a plurality of electrophoretic devices connected to one mass spectrometer, said method comprising loading different samples onto different electrophoretic devices at different times, followed by electrophoresis, wherein the shortest time that elapses between successive starts of electrophoresis from said devices within said system min(delta t) is shorter than the shortest time required for electrophoresis min(t(electrophoresis)).
4. The method of item 3, wherein said electrophoresis is capillary electrophoresis.
5. The method of any one of items 1 to 4, wherein the time that elapses between successive starts of elution or electrophoresis, respectively, is a constant delta t.
6. The method of any one of items 1 to 5, wherein the time required for elution or electrophoresis is a constant t(elution) or t(electrophoresis), respectively.
7. The method of any one of the preceding items, wherein the ratio t(elution) / delta t or the ratio t(electrophoresis) / delta t, respectively, after rounding off, is an integer n which preferably is the number of columns, electrophoresis devices and/or samples.
8. The method of item 7, wherein said ratio, without rounding off, is an integer n.
9. The method of item 7 or 8, wherein n is from 2 to about 200, preferably 3 to about 100 such as 4 to about 50 or about 5 to about 20.
10. The method of any one of the preceding items, wherein eluates from at least two or all of said columns or electro-eluates from at least two or all of said electrophoretic devices, respectively, are continuously fed into said mass spectrometer.
11. The method of any one of the preceding items, wherein at least two, preferably all columns or electrophoretic devices, respectively, are identical with regard to one or both of stationary phase and physical dimensions.
12. The method of any one of the preceding items, to the extent they refer to chromatography, wherein the same eluent(s) is/are used in at least two, preferably in all columns.
13. The method of any one of the preceding items, to the extent they refer to chromatography, wherein elution is gradient elution.
14. The method of any one of the preceding items, wherein at least two samples, preferably all samples are not labelled.
15. The method of any one of the preceding items, wherein the data generated by the mass spectrometer are assigned to individual samples.
16. The method of item 15, wherein assigning includes using a machine learning algorithm.
17. The method of item 16, wherein said algorithm predicts analyte retention times on said columns or electrophoretic devices, respectively.
18. The method of any one of the preceding items, wherein said samples comprise one or more of small molecules, amino acids, peptides, polypeptides, proteins, metabolites, saccharides, lipids, fatty acids, sterols, hydrocarbons, organic acids, drugs, macromolecular assemblies and/or said samples are environmental samples including samples suspected of comprising environmental toxins.
19. A system comprising:
   (a) a plurality of columns or electrophoretic devices, respectively, connected to
   (b) one mass spectrometer,
   wherein said system is configured for concomitant sample injection from at least two or all said columns, or at least two or all of said electrophoretic devices, respectively, into said mass spectrometer.
20. The system of item 19, wherein said system is furthermore configured for continuous sample injection from at least two or all said columns, or at least two or all of said electrophoretic devices, respectively, into said mass spectrometer.
21. The system of item 19 or 20, wherein said system further comprises (c) a computer program for predicting analyte retention times.

The Figures show:
- Figure 1:: Hardware configurations and time courses of sample injection from LC a plurality of LC columns into a mass spectrometer. (A) Configuration and time course in accordance with the invention. In this example, delta t is about ¼ of t(elution). (B) Upper part. For comparison, configuration and time course of the prior art (see background section). Only the overhead time can be spared. (B) Lower part. Multinozzle hardware for increasing ionization efficiency. This is shown for reference. It has no impact on the time course.
- Figure 2:: High resolution time course showing both acquisition of MS spectra as well as MS/MS spectra (see specification). Of note, MS and MS/MS acquisition proceed while a second sample is already being injected.

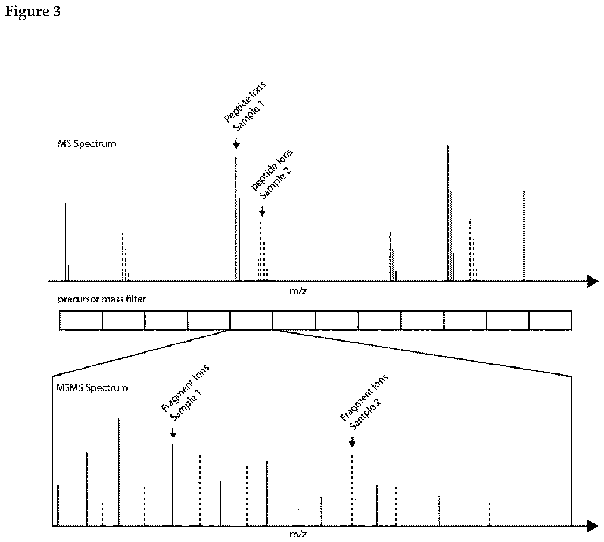

- Figure 3:: Exemplary MS and MS/MS spectra.
- Figure 4:: Data processing workflow.
- Figure 5:: Results of data deconvolution (see Example 2). (A) Delta t = 5 min; (B) Delta t = 10 min.

The Examples illustrate the invention.

### Example 1

### Materials and Methods

### Sample Preparation

Two hundred nanograms of a tryptic HeLa digest were loaded onto an Evotip Pure (Evosep, Denmark) following the manufacturer's protocol. In brief, the tips were activated in 1-propanol for three minutes, rinsed twice with 50 µL of buffer B (0.1% formic acid in acetonitrile), soaked again in 1-propanol for three minutes, and equilibrated twice with 50 µL of buffer A (0.1% formic acid in MS-grade H₂O). The 200 ng of tryptic HeLa digest were then loaded into 70 µL of buffer A within the tip and washed once with 50 µL of buffer A before layering 150 µL of buffer A onto the frit. All centrifugation steps were performed at 700 × g for one minute.

### Liquid chromatography

Two Evosep ONE systems (Evosep, Denmark) were operated in parallel using the default 21-minute (60 samples per day, SPD) gradient with buffer A and buffer B as mobile phase. The chromatography cycle was manually initiated within two Chronos software instances to achieve the delta time (delta t) intervals. Two PepSep Performance Columns (8 cm × 150 µm, 1.5 µm particles; Bruker, US) were used, one per LC unit, each equipped with a stainless steel emitter (inner diameter: 30 µm). The emitter tips were fixed horizontally in front of the MS entrance at a 20-40° angle towards each other and positioned approximately 1.5 mm from the vertical letterbox inlet.

### Mass Spectrometry Acquisition

Mass spectrometry data were acquired on an Orbitrap Eclipse (Thermo Scientific, US) instrument operating in data-independent acquisition (DIA) and full-scan MS modes. Ionization was performed using nano-electrospray ionization with a spray voltage of 3000 V (positive mode). The ion transfer tube temperature was set to 275°C, and the collision gas pressure was 1 mTorr. For full-scan MS, data were acquired at 60,000 resolving power, scanning from m/z 350-1650 with an AGC target of 400,000 and a maximum injection time of 60 ms. For DIA, quadrupole isolation windows of 30 m/z were used across the m/z 380-980 range, with 20 scan events per cycle. The collision energy was fixed at 27% (HCD mode). DIA spectra were collected at 15,000 resolving power, with an AGC target of 500,000 and a maximum injection time of 22 ms. Data were acquired in profile mode, and FAIMS was not used. The total method duration was set to 60 min and manually stopped upon completion of the second LC cycle.

### Data Analysis

Data processing was performed on a single combined mass spectrometry raw file which contained data for N parallel injections. As a first step, for all injections the elution start time was estimated based on the index and time delta. The raw file was split into N sub files which were processed individually. For each subfile, a spectral library was generated using an *in silico* digest of a reference proteome assembly. For all charged peptides in the library, retention time and fragmentation spectrum were predicted using PeptDeep (Zeng et al., Nat Commun 13, 7238 (2022)). By default a base model was used, after the first search, a fine-tuned (see Wallmann et al., https://doi.org/10.1101/2024.05.28.596182), injection specific model was used.

All library peptides were searched against in the spectral data and the most likely peak groups were retained. A multi-layer perceptron (MLP) deep neural network (Wallmann et al., *loc. cit.)* was trained to predict the probability of being a false decoy identification. Based on the final score, the best (lowest) decoy probability peak group was retained for every library entry and a count-based False Discovery Rate (FDR) was calculated. By default, all identifications were filtered on a run-level 1% FDR precursor threshold.

Precursors identified with 1% FDR were used for non-linear calibration of MS mass error, MS/MS mass error and retention time. LOESS (Locally Estimated Scatterplot Smoothing) regression using uniformly distributed kernels was used with first and second degree polynomial basis functions of the calibratable property.

The 95-percentile error between observed and predicted retention times was calculated to evaluate retention time accuracy. If the retention error was larger than 10% of the total gradient time for a single injection, fine tuning was performed. The identified precursors were split into training (70)%, validation set (20%) and test set (10%) and trained for a maximum of 50 epochs with an L2 loss. After each training epoch, a test epoch was run for assessing the test loss and data-specific test metrics. A custom learning rate scheduler with two phases was used: a warm-up period (default 5 epochs) during which the learning rate gradually increased to a maximum value (default: 0.005), followed by a phase where the learning rate was halved if the training loss did not significantly improve (default: >5% test loss) within a patience period (default: 3 epochs). Additionally, an early stopping mechanism interrupted training if the validation loss started to diverge or did not significantly improve (default: 12 epochs). Following transfer learning, library prediction and search was repeated until sufficient accuracy was achieved.

Following individual search, cohort level label-free protein quantification was performed using directLFQ. The quantification was based on the identified peptides and their fragment level signal intensities, using the 12 highest quality fragments based on the elution profile correlation.

### Example 2

### Results

Two samples of 200ng of a Hela cell digest (tryptic peptides) were injected using two parallel commercially available LC systems (Evosep ONE) at a gradient length per sample of 21 minutes into a Thermo Fisher Scientific Orbitrap Fusion Lumos Tribrid mass spectrometer. Analytes were continuously recorded over the course of both samples. The staggered continuous injection and acquisition strategy, which is described in this invention, was used at time deltas (delta t) of ten and five minutes between both samples. Data deconvolution was performed using the algorithm based on retention time prediction by machine learning as described above. The results conclusively show that both ten and five minute interval data can be reliably deconvoluted (Figure 5, upper panels). In addition, transfer learning narrowed down the retention time window considerably (Figure 5, lower panels), allowing unique assignment for the 5 minute delta method. The median retention time error was reduced from 25s to 12 s independent of the time delta and the corridor for confident assignment thereby decreased from 200s to 80s.

## Claims

1. A method of analyzing multiple samples, said method using a system comprising a plurality of chromatographic columns connected to one mass spectrometer, said method comprising loading different samples onto different chromatographic columns at different times, followed by elution, wherein the shortest time that elapses between successive starts of elution from said columns within said system min(delta t) is shorter than the shortest time required for elution min(t(elution)).

2. A method of analyzing multiple samples, said method using a system comprising a plurality of electrophoretic devices connected to one mass spectrometer, said method comprising loading different samples onto different electrophoretic devices at different times, followed by electrophoresis, wherein the shortest time that elapses between successive starts of electrophoresis from said devices within said system min(delta t) is shorter than the shortest time required for electrophoresis min(t(electrophoresis)).

3. The method of claim 1 or 2, wherein the time that elapses between successive starts of elution or electrophoresis, respectively, is a constant delta t.

4. The method of any one of claims 1 to 3, wherein the time required for elution or electrophoresis is a constant t(elution) or t(electrophoresis), respectively.

5. The method of the preceding claims, wherein the ratio t(elution) / delta t or the ratio t(electrophoresis) / delta t, respectively, after rounding off, is an integer n which preferably is the number of columns, electrophoresis devices and/or samples.

6. The method of claim 5, wherein n is from 2 to about 200, preferably 3 to about 100 such as 4 to about 50 or about 5 to about 20.

7. The method of any one of the preceding claims, wherein eluates from at least two or all of said columns or electro-eluates from at least two or all of said electrophoretic devices, respectively, are continuously fed into said mass spectrometer.

8. The method of any one of the preceding claims, wherein at least two, preferably all columns or electrophoretic devices, respectively, are identical with regard to one or both of stationary phase and physical dimensions.

9. The method of any one of the preceding claims, to the extent they refer to chromatography, wherein the same eluent(s) is/are used in at least two, preferably in all columns.

10. The method of any one of the preceding claims, wherein the data generated by the mass spectrometer are assigned to individual samples.

11. The method of claim 10, wherein assigning includes using a machine learning algorithm.

12. The method of claim 11, wherein said algorithm predicts analyte retention times on said columns or electrophoretic devices, respectively.

13. A system comprising:
(d) a plurality of columns or electrophoretic devices, respectively, connected to
(e) one mass spectrometer,
wherein said system is configured for concomitant sample injection from at least two or all said columns, or at least two or all of said electrophoretic devices, respectively, into said mass spectrometer.

14. The system of claim 13, wherein said system is furthermore configured for continuous sample injection from at least two or all said columns, or at least two or all of said electrophoretic devices, respectively, into said mass spectrometer.

15. The system of claim 13 or 14, wherein said system further comprises
(f) a computer program for predicting analyte retention times.
